# EUROPÄISCHE PATENTSCHRIFT

(11) **EP 3 858 644 B1**
(45) Veröffentlichungstag und Bekanntmachung des Hinweises auf die Patenterteilung: **06.12.2023**
(21) Anmeldenummer: 20200733.2
(22) Anmeldetag: 08.10.2020
(51) Int. Cl.: B60C 23/00

(54) **ZUGMASCHINE**
TOWING VEHICLE
TRACTEUR

(30) Priorität: 30.01.2020 DE 102020102330
(43) Veröffentlichungstag der Anmeldung: 04.08.2021
(73) Patentinhaber: CLAAS Tractor S.A.S., 78141 Vélizy-Villacoublay Cedex (FR)
(72) Erfinder: Ehlert, Christian, 33719 Bielefeld (DE); Wieckhorst, Jan Carsten, 33104 Paderborn (DE); Birkmann, Christian, 33775 Versmold (DE); Schütte, Robin, 33142 Büren (DE); Müller, Ralf, 39217 Schönbeck/OT Pretzien (DE)
(74) Vertreter: CLAAS Gruppe

(56) Entgegenhaltungen:
- EP-A1- 3 300 978
- EP-A1- 3 305 053
- DE-A1-102011 085 040
- DE-A1-102011 085 041
- DE-A1-102013 106 548
- DE-B3- 10 336 330
- DE-U1-202019 102 183
- US-A1- 2019 128 690

## Beschreibung

Die vorliegende Erfindung betrifft eine Zugmaschine, insbesondere einen Traktor, gemäß dem Oberbegriff des Anspruches 1. Weiterhin betrifft die Erfindung ein Fahrerassistenzsystem zur Verwendung in einer Zugmaschine nach Anspruch 16 sowie eine Verfahren zum Betreiben einer Zugmaschine gemäß dem Anspruch 19.

Aus dem Stand der Technik ist eine Zugmaschine wie ein Traktor oder dergleichen bekannt, die mit verschiedenartig ausgeprägten Reifendruckregelanlagen ausgestattet ist, um es einer Bedienperson der Zugmaschine zu ermöglichen, einen gewünschten Reifeninnendruck einzustellen. Bekanntermaßen lässt sich eine Zugmaschine durch Wahl eines geeigneten Reifendrucks an den jeweiligen Einsatzzweck anpassen. So wird beispielsweise eine Zugmaschine auf dem Feld mit einem niedrigeren Reifeninnendruck betrieben als bei Straßenfahrt, um bei Feldfahrt durch eine erhöhte Aufstandsfläche (relativ geringer Reifeninnendruck) die Bodenbeanspruchung und damit Bodenverdichtung gering zu halten und den Traktionswirkungsgrad zu erhöhen. Andererseits wird bei Straßenfahrt (relativ hoher Reifeninnendruck) durch einen geringeren Rollwiderstand der Reifen-Boden-Paarung in erheblichem Maße Kraftstoff eingespart.

Trotz Vorhandenseins bekannter Reifendruckregelanlagen - und somit der technischen Möglichkeit der Einstellung eines gewünschten Reifendrucks - besteht für die Bedienperson eine Schwierigkeit darin, einen für den jeweiligen Einsatzzweck auch tatsächlich geeigneten Reifeninnendruck zu wählen. Für die Wahl eines für einen bestimmten Einsatzzweck geeigneten Reifeninnendrucks sind zahlreiche unterschiedliche Faktoren zu berücksichtigen, die sich zudem während eines Arbeitseinsatzes der Zugmaschine ändern können. Darüber hinaus muss beispielsweise bei der Wahl des Reifeninnendrucks sichergestellt werden, dass eine vom Reifenhersteller vorgegebene sogenannte Reifentragfähigkeitsgrenze nicht überschritten wird. Als Reifentragfähigkeitsgrenze wird dabei der minimal zulässige Reifeninnendruck bezeichnet, welcher für eine bestimmte Radlast und Fahrgeschwindigkeit der Zugmaschine zulässig ist.

Aus der EP 3 216 628 B1 ist eine Einrichtung zur Reifenfülldrucküberwachung einer Zugmaschine mit einem adaptierten landwirtschaftlichen Anbaugerät, die ein Fahrzeugsystem bilden, gemäß dem Oberbegriff des Anspruches 1 bekannt. Die Einrichtung zur Reifenfülldrucküberwachung ist zur Einstellung und Anpassung des Reifeninnendrucks zumindest eines Reifens des Fahrzeugsystems mittels einer Reifendruckregelanlage anhand einer Betriebszustandsklassifizierung, die aus Betriebszustandsgrößen wie der Beschaffenheit der befahrenen Bodenoberfläche zur Unterscheidung zwischen Straßenfahrt und Feldfahrt abgeleitet wird, eingerichtet. Die abgeleitete Betriebszustandsklassifizierung wird georeferenziert abgespeichert, um bei Erkennung einer erneuten Annäherung des Fahrzeugsystems an die abgespeicherte Geoposition die korrespondierende Betriebszustandsklassifizierung abzurufen und den Reifeninnendruck entsprechend vorausschauend und automatisch durch eine Ansteuerung der Reifendruckregelanlage anzupassen. Dabei orientiert sich der einzustellende Reifeninnendruck schwerpunktmäßig daran, ob es sich um eine Straßenfahrt oder eine Feldfahrt handelt. Entsprechend wird wahlweise ein höherer Reifeninnendruck für einen kraftstoffsparenden Betrieb der Zugmaschine bei Straßenfahrt oder ein möglichst niedriger Reifeninnendruck für einen bodenschonenden Betrieb bei Feldfahrt eingestellt.

Weitere Steuereinheiten zur Einstellung eines Reifeninnendrucks sind beispielsweise aus der DE 10 2013 106 548 A1, DE 10 2011 085 040A1, DE 10 2011 085 041 A1, EP 3 305 053 A1, DE 103 36 330 B3, EP 3 300 978 A1, US 2019/128690 A1 und der DE 20 2019 102 183 U1 bekannt.

Aufgabe der vorliegenden Erfindung ist es, eine Zugmaschine der eingangs genannten Art derart auszugestalten und weiterzubilden, dass die komplexen Zusammenhänge bei der Einstellung und Anpassung des Reifeninnendrucks der Zugmaschine und eines adaptierten Anbaugerätes besser erfasst und berücksichtigt werden.

Diese Aufgabe wird vorrichtungsseitig durch eine Zugmaschine mit den Merkmalen des Anspruches 1 gelöst. Weiterhin wird zur Lösung der Aufgabe ein Fahrerassistenzsystem mit einem Reifendruckregelautomaten zur Verwendung mit einer Zugmaschine gemäß dem nebengeordneten Anspruch 16 sowie ein Verfahren zum Betreiben einer Zugmaschine gemäß dem nebengeordneten Anspruch 19 vorgeschlagen.

Gemäß dem Anspruch 1 wird eine Zugmaschine, insbesondere ein Traktor, mit einem Antriebsstrang und einer Reifendruckregelanlage zur Einstellung und Anpassung eines Reifeninnendrucks zumindest eines Reifens der Zugmaschine sowie mit wenigstens einem an die Zugmaschine adaptierten Anbaugerät vorgeschlagen, wobei der Antriebsstrang zumindest einen Antriebsmotor, ein Getriebe, zumindest einen Nebenabtrieb und zumindest ein Nebenaggregat umfasst. Die erfindungsgemäße Zugmaschine weist zur Ansteuerung der Reifendruckregelanlage ein Fahrerassistenzsystem auf, welches mit einer Recheneinheit, einer Speichereinheit sowie einer Ein-Ausgabeeinheit ausgeführt ist, wobei das Fahrerassistenzsystem einen kennlinienbasierend arbeitenden Reifendruckregelautomaten umfasst, wobei der Reifendruckregelautomat für eine optimierte Ansteuerung der Reifendruckregelanlage in Abhängigkeit von in der Speichereinheit hinterlegten auswählbaren Regelstrategien und/oder Optimierungszielgrößen eingerichtet ist. Die erfindungsgemäße Zugmaschine ist dadurch gekennzeichnet, dass der Reifendruckregelautomat Steuersignale generiert, die zumindest einer Steuervorrichtung der Zugmaschine zugeführt werden und dort die Ansteuerung der Reifendruckregelanlage der Zugmaschine durch Generierung entsprechender Steuersignale bewirken. Das Fahrerassistenzsystem ermöglicht es einer Bedienperson der Zugmaschine, durch die Auswahl einer Regelstrategie und/oder einer oder mehrerer Optimierungszielgrößen ohne tiefer gehende Kenntnisse über das Betriebsverhalten der Reifen bei verschiedenen Innendrücken und unterschiedlichen Betriebsbedingungen der Zugmaschine eine Optimierung der Ansteuerung der Reifendruckregelanlage zu erreichen. Dabei werden durch den kennlinienbasierend arbeitenden Reifendruckregelautomat Zusammenhänge gesamtheitlich berücksichtigt, welche Einfluss auf die Regelstrategie bzw. auf die Optimierungszielgröße(n) haben. Der Reifendruckregelautomat ist zur automatischen Ermittlung des Reifeninnendruckes eingerichtet, der für aktuell herrschende Traktionsbedingungen zu einem maximalen Traktionswirkungsgrad führt. Dazu werden auch die Einflussgrößen des Antriebsstranges erfasst, die bei der Bestimmung des jeweils optimalen Reifeninnendrucks berücksichtigt werden. Bei diesen Einflussgrößen handelt es sich unter anderem um die Wirkungsgradcharakteristik der zum Antriebsstrang gehörenden Komponenten. Vorteilhafterweise können durch den Reifendruckregelautomaten die in der Betriebspraxis auftretenden Streuungen von Wirkungsgraden und/oder variierenden Betriebsverhalten von Zugmaschine, Anbaugerät sowie Änderungen der Umgebungsbedingungen berücksichtigt werden. Der kennlinienbasierend arbeitende Reifendruckregelautomat berücksichtigt alle Einflussgrößen des Gesamtsystems aus Zugmaschine und Anbaugerät. Insbesondere werden durch den Reifendruckregelautomaten die in der Praxis auftretenden Streuungen von Wirkungsgraden und oder Betriebsverhalten des Fahrwerks der Zugmaschine berücksichtigt. Durch die erfindungsgemäße Zugmaschine kann das Gesamtsystem aus Zugmaschine mit Antriebsstrang und adaptiertem Anbaugerät auf Basis einer automatisierten Einstellung des Reifeninnendruckes ganzheitlich optimiert werden, um ein an die jeweilige Betriebssituation angepassten und optimierten Betrieb zu gewährleisten. Die Recheneinheit, die Speichereinheit sowie die Ein-Ausgabeeinheit des Fahrerassistenzsystems können räumlich voneinander getrennt vorliegen, d.h. sie müssen nicht zusammen auf der Zugmaschine angeordnet sein.

Der Begriff Regelstrategie bezeichnet eine übergeordnete Vorgabe einer Betriebsweise der Zugmaschine, ohne eine Vorgabe durch Auswahl einer oder mehrerer Regelgrößen. Der Begriff Optimierungszielgröße beschreibt eine konkrete Zielstellung unter Vorgabe einer oder mehrerer Regelgrößen, die durch die Ansteuerung des Antriebsstranges durch den Reifendruckregelautomaten erreicht werden soll.

Die jeweilige Optimierungszielgröße bildet einen spezifischen Unterabschnitt der-Regelstrategie ab, deren Adaption zur Erreichung und Einhaltung der Regelstrategie vorzunehmen ist.

Ein Antriebsmotor des Antriebsstranges ist als Verbrennungsmotor ausgeführt. Der Antriebsstrang kann zusätzlich einen weiteren Antriebsmotor umfassen, der beispielsweise als Elektromotor ausgeführt ist. Das Getriebe ist bevorzugt als Lastschaltgetriebe oder stufenloses Getriebe ausgeführt. Ein Nebenaggregat des Antriebsstranges bildet beispielsweise ein Motorlüfter, eine Hydraulikpumpe oder ein elektrischer Generator. Weiterhin bilden Vorrichtungen zur Aufnahme des Anbaugerätes wie ein Front- und/oder Heckkraftheber ein Nebenaggregat, welches von dem Antriebsstrang angetrieben wird. Als Nebenabtrieb ist insbesondere eine Zapfwelle anzusehen, welche dem Antrieb des Anbaugerätes dienen kann.

Das Anbaugerät für die Zugmaschine kann beispielsweise als Transportanhänger, Ladewagen, Schwader, Wender, Mähwerk, Ballenpresse, Bodenbearbeitungsgerät, beispielsweise Grubber oder Pflug, Pflanzenschutzspritze oder Düngerstreuer ausgeführt sein.

So kann die Reifendruckregelanlage zusammen mit dem Fahrerassistenzsystem den Reifendruckregelautomaten bilden, indem die Recheneinheit dazu eingerichtet ist, zur Umsetzung der jeweils ausgewählten Regelstrategie und/oder Optimierungszielgröße den einzustellenden Reifeninnendruck beeinflussende Parameter autonom zu ermitteln und der Reifendruckregelanlage vorzugeben. Die Basis für die Ermittlung der heranzuziehenden Parameter, die den durch die Reifendruckregelanlage einzustellenden Reifeninnendruck beeinflussen, bildet die Auswahl einer der Regelstrategien bzw. von Optimierungszielgrößen, die in der Speichereinheit des Fahrerassistenzsystems hinterlegt sind. Mit der vorschlagsgemäßen Realisierung des Reifendruckregelautomaten kann durch eine einmalige Auswahl der Regelstrategie bzw. von Optimierungszielgrößen durch die Bedienperson eine Art und Weise der Ansteuerung der Reifendruckregelanlage vorgegeben werden. Für die weitere Ermittlung der der den einzustellenden Reifeninnendruck beeinflussenden Parameter der Reifendruckregelanlage im engeren Sinne ist eine weitere Eingabe vom Fahrer nicht erforderlich, da diese autonom durch den Reifendruckregelautomaten erfolgt. Der Bedienperson kann aber die Möglichkeit eröffnet werden, beispielsweise die gewählte Regelstrategie und/oder eine Optimierungszielgröße auf Wunsch zu ändern, so dass daraufhin weiter eine autonome Ansteuerung der Reifendruckregelanlage durch den Reifendruckregelautomaten stattfindet, jedoch dann gegebenenfalls mit einer anderen Priorisierung.

Insbesondere kann die auswählbare Regelstrategie zumindest eine Regelstrategie "Effizienz" oder "Leistung" umfassen. Mit der Regelstrategie "Effizienz" wird eine Optimierung des Kraftstoffverbrauchs pro Flächeneinheit durchgeführt, wobei der Betriebspunkt in einem n-dimensionalen Kennfeld unter Berücksichtigung der Parameter des Antriebsstranges im Bereich des minimal möglichen Kraftstoffverbrauchs liegt. Mit der Regelstrategie "Leistung" wird eine Optimierung der Flächenleistung durchgeführt, wobei der Betriebspunkt im n-dimensionalen Kennfeld unter Berücksichtigung der den einzustellenden Reifeninnendruck beeinflussende Parameter im Bereich maximaler Flächenleistung liegt. Dazu werden entsprechend der jeweiligen gewählten Regelstrategie bzw. Optimierungszielgröße der Reifeninnendruck unter Berücksichtigung der anderen den Systemwirkungsgrad beeinflussenden Parameter, insbesondere der Parameter des Antriebsstranges, variiert.

Die Optimierungszielgrößen können "Flächenleistung", "Flächenverbrauch", "Ertrag pro Fläche", "Kosten pro Fläche" und/oder "Arbeitsqualität" sein. Die Optimierungszielgröße "Kosten pro Fläche" kann beispielsweise vordergründig anfallende Personalkosten, Kraftstoffkosten, Verschleißkosten, Betriebsstunden und dergleichen mehr berücksichtigen. Die Optimierungszielgröße "Flächenleistung" kann beispielsweise vordergründig auf die Steigerung der bearbeiteten Fläche und/oder verarbeiteten Masse landwirtschaftlicher Güter gerichtet sein. Die Optimierungszielgröße "Arbeitsqualität" stellt beispielsweise die Einmischung von Ernterückständen, die Krümelung, die Rückverfestigung, die Futterqualität und dergleichen mehr bei der Ansteuerung des Antriebsstranges in den Vordergrund.

Bevorzugt kann der Reifendruckregelautomat dazu eingerichtet sein, den Traktionswirkungsgrad der Zugmaschine in Abhängigkeit von der ausgewählten Regelstrategie und/oder Optimierungszielgröße zu optimieren. Insbesondere bei der Feldfahrt dient die automatische Ermittlung und Anpassung des Reifeninnendruckes durch den Reifendruckregelautomaten dazu, den jeweils für aktuell herrschende Traktionsbedingungen maximalen respektive optimalen Traktionswirkungsgrad unter Berücksichtigung der Reifentragfähigkeitsgrenze durch die Ansteuerung der Reifendruckregelanlage einzustellen. Der Begriff Feldfahrt umfasst auch Arbeitsfahrten der Zugmaschine, die beispielsweise auf einem Silo oder einem sonstigen Untergrund auszuführen sind, der keine befestigte Oberfläche aufweist, auszuführen sind.

Vorzugsweise kann der Reifendruckregelautomat dazu eingerichtet sein, den Reifeninnendruck rad- und/oder achsspezifisch und/oder ganzheitlich zu optimieren. Hierdurch lässt sich eine größtmögliche Flexibilität bei der Realisierung der ausgewählten Regelstrategie und/oder Optimierungszielgröße durch den Reifendruckregelautomaten erreichen.

Dabei können die zur optimierten Ansteuerung der Reifendruckregelanlage zu berücksichtigenden Parameter Betriebsparameter der Zugmaschine, des Antriebsstranges, des Anbaugerätes und/oder aus Umgebungsbedingungen resultierende Umweltparameter sein. Bevorzugt finden zumindest die Betriebsparameter des Antriebsstranges und des Anbaugerätes Eingang in die optimierte Ansteuerung, da diese zumeist unmittelbar an der Zugmaschine bzw. dem Anbaugerät erfasst werden können. Weiterhin können Umweltparameter vom dem Reifendruckregelautomaten erfasst, bestimmt oder empfangen werden, welche Rückschlüsse auf aktuell vorherrschende Bodenkonditionen des Bodens zulassen, auf dem die Zugmaschine und das adaptierte Anbaugerät bewegt werden.

Bevorzugt können zumindest an der Zugmaschine Sensoreinrichtungen angeordnet sein, die zur Bestimmung von Betriebsparametern und/oder Umweltparametern dienen. Dabei kann es sich bei einer der Sensoreinrichtungen beispielsweise um einen Drehzahlsensor, einen Drehmomentsensor, einen Drucksensor oder einen Kraftsensor handeln. Die Sensoreinrichtungen zur Bestimmung von Betriebsparametern der Zugmaschine sind dem Antriebsstrang bzw. dessen Komponenten, wie Nebenabtrieb oder Nebenaggregaten, unmittelbar zugeordnet. Weiterhin können der Zugmaschine und/oder dem Anbaugerät zusätzliche Sensoreinrichtungen zugeordnet sein, die zur Bestimmung von Betriebsinformationen oder Betriebsparametern der Zugmaschine und/oder des Anbaugerätes sowie zur Bestimmung und/oder zum Empfang von Umweltparametern eingerichtet sind. Dabei kann es sich bei einer der Sensoreinrichtungen beispielsweise um einen Geschwindigkeitssensor, einen Neigungssensor, einen optischen Sensor und/oder einen Positionsortungssensor handeln. Mittels des Neigungssensors lässt sich beispielsweise eine Neigung der Zugmaschine und/oder des Anbaugerätes in Längs- und//oder Querrichtung detektieren. Dadurch kann auf die in der jeweiligen Betriebssituation vorherrschende Topologie geschlossen werden. Diese Betriebsinformation kann durch von dem Positionsortungssensor bereitgestellte Daten ergänzt und/oder verifiziert werden.

Insbesondere können die Betriebsparameter der Zugmaschine und/oder des Anbaugerätes die Ausgangsleistung des zumindest einen Antriebsmotors, die Ausgangsleistung des Getriebes bzw. die Getriebeauslastung, die Antriebsleistung des zumindest einen Nebenaggregates und/oder des zumindest einen Nebenabtriebes, den Schlupf, die Fahrgeschwindigkeit, die Getriebeübersetzung, den Leistungsfluss im Hydraulikantriebsstrang, den Anbaugerätetyp und/oder Einstellparameter des Anbaugerätes umfassen.

Weiterhin kann in der Speichereinheit ein funktionales Modell der Zugmaschine und des Anbaugerätes hinterlegt sein, welches zumindest einen Teil der funktionalen Zusammenhänge der Zugmaschine und des Anbaugerätes abbildet. So können mittels des funktionalen Modells die verschiedenen Betriebssituationen der Zugmaschine und des adaptierten Anbaugerätes modelliert werden, um in der jeweiligen Betriebssituation und unter Berücksichtigung der ausgewählten Regelstrategie und/oder Optimierungszielgröße(n) eine optimierte Ansteuerung der Reifendruckregelanlage durch den Reifendruckregelautomaten zu erreichen. Denkbar sind alternativ auch reine Black-Box-Modelle, die beispielsweise auf Künstlicher Intelligenz (KI) oder neuronalen Netzwerken basieren, oder Mischformen, um zumindest einen Teil der funktionalen Zusammenhänge des Antriebsstranges abzubilden.

Bevorzugt kann zur Abbildung der funktionalen Zusammenhänge der Zugmaschine dem Betriebsparameter Reifeninnendruck mindestens ein n-dimensionales Kennfeld zugeordnet sein, wobei der Reifeninnendruck als Ausgangsgröße des mindestens einen n-dimensionalen Kennfeldes definiert ist. Mittels des mindestens einen n-dimensionalen Kennfeldes lassen sich auch komplexe funktionale Zusammenhänge des Gesamtsystems aus Zugmaschine, Anbaugerät und Umgebung mit geringem rechnerischen Aufwand abbilden. Kennlinien des n-dimensionalen Kennfeldes können adaptiv an die jeweilige Situation angepasst werden, um Zusammenhänge beim Betrieb von Zugmaschine, Anbaugerät und Umgebungsbedingungen gesamtheitlich zu berücksichtigten, welche Einfluss auf die Regelstrategien bzw. auf die Optimierungszielgröße(n) und damit auf die jeweils erforderliche Einstellung des Reifeninnendruckes haben. Die Anpassung der Kennlinien des n-dimensionalen Kennfeldes erfolgt dabei durch den Reifendruckregelautomaten.

Dabei können zumindest ein oder mehrere Betriebsparameter der Zugmaschine, des Anbaugerätes und/oder aus den Umgebungsbedingungen resultierende Umweltparameter die Eingangsgrößen des mindestens einen n-dimensionalen Kennfeldes sein. So können als Eingangsgrößen die Betriebsparameter Ausgangsleistung des zumindest einen Antriebsmotors, Ausgangsleistung des Getriebes, Getriebeauslastung, Antriebsleistung des zumindest einen Nebenaggregates und/oder des zumindest einen Nebenabtriebs, Schlupf, Leistungsfluss im Nebenabtriebsstrang und/oder Leistungsfluss im Hydraulikantriebsstrang und/oder einem elektrischen Antriebsstrang vorgesehen sein. Weitere Eingangsgrößen können Reifengröße und Reifentyp bilden, die an den Achsen der Zugmaschine angeordnet sind als auch von den Reifen auf den Boden übertragene Radkräfte sein. Umweltparameter als Eingangsgröße können unter anderem Bodenart, Bodentyp, Bodenzustand und/oder Bodenfeuchte sowie die jeweilige Topographie sein.

Diese Umweltparameter können gleichermaßen bei Feldfahrt als auch bei Straßenfahrt als Eingangsgröße(n) Berücksichtigung finden.

Vorzugsweise kann die Recheneinheit das mindestens eine n-dimensionale Kennfeld in Abhängigkeit von der ausgewählten Regelstrategie und/oder Optimierungszielgröße(n) auswählen und der Ermittlung des Reifeninnendrucks zugrunde legen. Dadurch kann für die Ansteuerung der Reifendruckregelanlage eine Ausgangsbasis bereitgestellt werden, um die angestrebten Ergebnisse, die mit der Auswahl der Regelstrategie und/oder der Optimierungszielgröße (n) erreicht werden sollen, zu erzielen, ohne dass es eines weiteren Zutuns durch die Bedienperson bedarf.

Gemäß einer bevorzugten Weiterbildung kann die Recheneinheit das mindestens eine n-dimensionale Kennfeld im laufenden Betrieb, insbesondere zyklisch, mit den Einsatzbedingungen der Zugmaschine und des Anbaugerätes abgleichen, vorzugsweise, dass in der Speichereinheit mindestens ein n-dimensionales Initialkennfeld hinterlegt ist, und dass bei der ersten Ermittlung des Reifeninnendrucks die Recheneinheit die Ermittlung basierend auf dem Initialkennfeld vornimmt.

Dabei kann die Recheneinheit dazu eingerichtet sein, eine Anpassung der Ausprägung des Initialkennfeldes an bestehende Einsatzbedingungen durch die Verwendung gemessener Betriebsparameter zumindest der Zugmaschine, insbesondere auch des Anbaugerätes, oder das Anfahren von Stützstellen im Initialkennfeld durchzuführen. Zusätzlich können gemessene, empfangene oder auf sonstige Weise bestimmte Umweltparameter verwendet werden, um eine Anpassung der Ausprägung des Initialkennfeldes an bestehende Einsatzbedingungen vorzunehmen. Wenn im n-dimensionalen Raum des Initialkennfeldes gemessene Parameter fehlen oder nur in unzureichender Menge vorliegen, wobei diese im standardmäßigen Betrieb der Zugmaschine nicht angefahren werden, können stattdessen Stützstellen angefahren werden. Ausgehend von dem Initialkennfeld kann durch das Einstellen von vordefinierten Betriebspunkten, welche Stützstellen im Kennfeld darstellen, die Ausprägung des Kennfelds an die aktuellen Einsatzbedingungen angepasst werden.

Im laufenden Betrieb der Zugmaschine kann die genaue Ausprägung des mindestens einen n-dimensionalen Kennfelds durch Ermitteln zumindest eines der im n-dimensionalen Kennfeld aufgetragenen Parameter an die aktuellen Einsatzbedingungen angepasst werden. Im Arbeitsbetrieb der Zugmaschine, d.h. bei Feldfahrt oder Straßenfahrt, können die Einsatzbedingungen starken Schwankungen unterliegen, die durch den Reifendruckregelautomaten zeitnah erfasst und berücksichtigt werden können, um den Betrieb gemäß der ausgewählten Regelstrategie und/oder der ausgewählten Optimierungszielgröße(n) zu optimieren. Zeitnah heißt, dass der Reifendruckregelautomat innerhalb eines von den Betriebsgrößen und Reaktionszeiten der Reifendruckregelanlage abhängigen Zeitintervalls auf Änderungen reagieren kann, um eine Veränderung des Reifeninnendruckes zu bewirken.

Die Kenntnis des n-dimensionalen Kennfelds ermöglicht es dem Reifendruckregelautomaten zur automatischen Einstellung des Reifeninnendruckes den Reifeninnendruck rad- und/oder achsspezifisch und/oder ganzheitlich so zu verstellen, dass der Reifeninnendruck entsprechend der jeweiligen Regelstrategie und/oder der Optimierungszielgröße(n) optimiert wird. Dabei bildet der Reifeninnendruck die Stellgröße.

Des Weiteren wird die eingangs gestellte Aufgabe gemäß dem Anspruch 16 durch ein Fahrerassistenzsystem mit einem Reifendruckregelautomaten zur Verwendung in einer Zugmaschine nach einem der Ansprüche 1 bis 15 gelöst.

Dabei kann das Fahrerassistenzsystem auf einem Daten-Cloudservice basierend ausgeführt sein. Dabei werden von den Sensoreinrichtungen der Zugmaschine und/oder dem Anbaugerät generierte Informationen sowie externe Informationen an den Cloudservice übertragen und dort mittels Algorithmus aufbereitet. Die aufbereiteten Daten werden als die zu übertragenden Daten, in Abhängigkeit von denen die Regelstrategie ausgewählt wird, dem Reifendruckregelautomaten zuleitet. Alternativ oder zusätzlich kann die externe Rechnereinheit Daten, insbesondere externe Informationen von Dienstanbietern, mittels eines Algorithmus aufbereiten und die aufbereiteten Daten als zu übertragende Daten, in Abhängigkeit von denen die Regelstrategie ausgewählt wird, an den Reifendruckregelautomaten übertragen.

Des Weiteren kann das Fahrerassistenzsystem ein mobiles Datenübertragungsgerät umfassen. Das mobile Datenübertragungsgerät kann mit dem Daten-Cloudservice in kommunikativer Verbindung stehen.

Weiterhin wird die eingangs gestellte Aufgabe durch ein Verfahren zum Betreiben einer Zugmaschine mit den Merkmalen des nebengeordneten Anspruches 19 gelöst.

Gemäß dem nebengeordneten Anspruch 19 wird ein Verfahren zum Betreiben einer Zugmaschine, insbesondere eines Traktors, mit einem Antriebsstrang und einer Reifendruckregelanlage zur Einstellung und Anpassung eines Reifeninnendrucks zumindest eines Reifens der Zugmaschine sowie mit wenigstens einem an die Zugmaschine adaptierten Anbaugerät vorgeschlagen, wobei der Antriebsstrang zumindest einen Antriebsmotor, ein Getriebe, zumindest einen Nebenabtrieb und zumindest ein Nebenaggregat umfasst, wobei die Zugmaschine durch ein Fahrerassistenzsystem angesteuert wird, welches mit einer Recheneinheit, einer Speichereinheit sowie einer Ein-Ausgabeeinheit ausgeführt ist, wobei die Reifendruckregelanlage durch einen kennlinienbasierend arbeitenden Reifendruckregelautomaten des Fahrerassistenzsystems angesteuert wird, wobei der Reifendruckregelautomat für eine optimierte Ansteuerung der Reifendruckregelanlage in Abhängigkeit von in der Speichereinheit hinterlegten auswählbaren Regelstrategien und/oder Optimierungszielgrößen angesteuert wird, wobei der Reifendruckregelautomat Steuersignale generiert, die zumindest einer Steuervorrichtung der Zugmaschine zugeführt werden und dort die Ansteuerung der Reifendruckregelanlage der Zugmaschine durch Generierung entsprechender Steuersignale bewirken. Durch das Verfahren kann das Gesamtsystem aus Zugmaschine und adaptiertem Anbaugerät auf Basis einer Einstellung des Reifeninnendruckes ganzheitlich optimiert werden. Durch den Reifendruckregelautomaten wird die Reifendruckregelanlage optimiert angesteuert, um für aktuell herrschende Traktionsbedingungen einen maximalen Traktionswirkungsgrade zu erzielen. Dazu werden die Einflussgrößen von Zugmaschine und Anbaugerät erfasst und berücksichtigt, die den jeweils optimalen Reifeninnendruck mit beeinflussen. Vorteilhafterweise können durch den Reifendruckregelautomaten die in der Betriebspraxis auftretenden Streuungen von Wirkungsgraden und/oder variierenden Betriebsverhalten von Zugmaschine, Anbaugerät sowie Änderungen der Umgebungsbedingungen berücksichtigt werden. Insbesondere werden durch den Reifendruckregelautomaten die in der Praxis auftretenden Streuungen von Wirkungsgraden und oder Betriebsverhalten des Fahrwerks der Zugmaschine berücksichtigt.

Das Verfahren zum Betreiben der Zugmaschine kann alle im Zusammenhang mit der landwirtschaftlichen Zugmaschine sowie dem Fahrerassistenzsystem beschriebenen Merkmale einzeln oder in Kombination aufweisen.

Die vorliegende Erfindung wird nachstehend anhand eines in den Zeichnungen dargestellten Ausführungsbeispieles näher erläutert.

Es zeigen:
- Fig. 1: eine schematische Darstellung einer Zugmaschine und eines an die Zugmaschine adaptierten Anbaugerätes;
- Fig. 2: eine schematische Darstellung eines Antriebsstranges der Zugmaschine;
- Fig. 3: eine Detailansicht eines Fahrerassistenzsystems der Zugmaschine;
- Fig. 4: exemplarisch ein n-dimensionales Kennfeld zur Ansteuerung einer Reifendruckregelanlage der Zugmaschine; und
- Fig. 5: exemplarisch ein Initialkennfeld, welches aufgrund einer Änderung eines Betriebsparameters der Zugmaschine adaptiert wird.

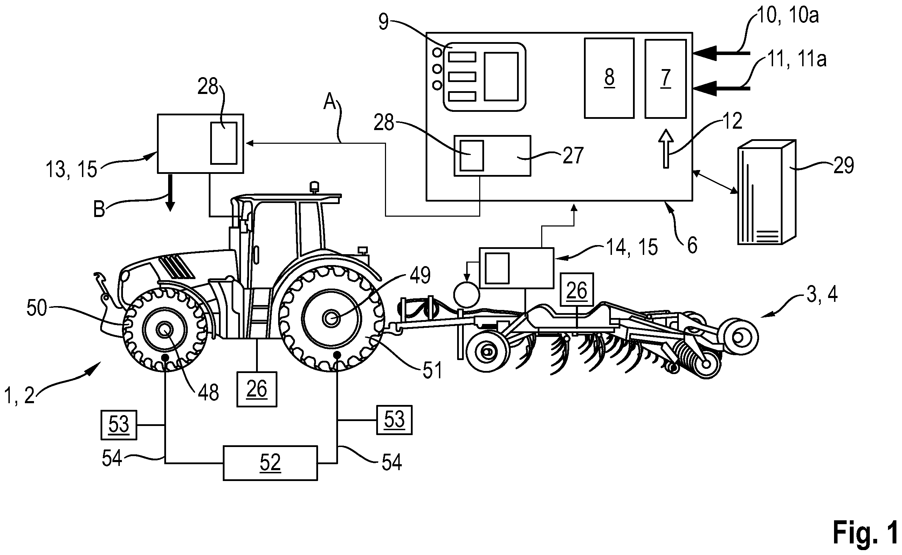

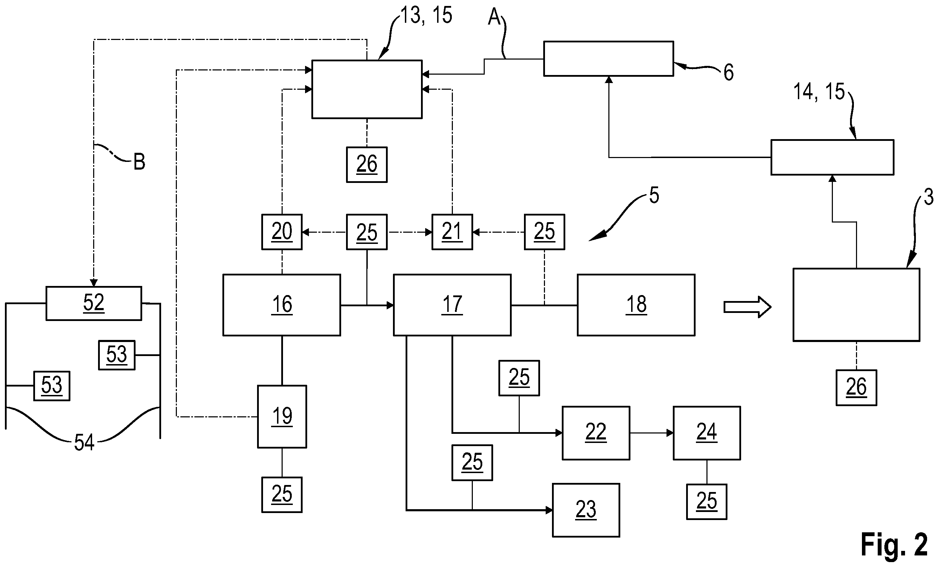

Die in Fig. 1 dargestellte landwirtschaftliche Maschinenanordnung umfasst eine als Traktor 2 ausgeführte Zugmaschine 1 und zumindest ein an die Zugmaschine 1 adaptiertes Anbaugerät 3. Das Anbaugerät 3 ist im dargestellten Ausführungsbeispiel als Bodenbearbeitungsgerät 4 - hier als sogenannter Grubber ausgeführt. Es liegt im Rahmen der Erfindung, dass das Anbaugerät 3 als beliebiges Anbaugerät, wie etwa als Transportanhänger, Ladewagen, Schwader, Wender, Mähwerk, Ballenpresse, sonstiges Bodenbearbeitungsgeräte, etwa als Pflug, Pflanzenschutzspritze oder Düngerstreuer ausgeführt sein kann. Die Zugmaschine 1 umfasst einen Antriebsstrang 5, welcher in Fig. 2 schematisch dargestellt ist. Weiterhin umfasst die Zugmaschine 1 zumindest zwei Achsen, eine Vorderachse 48 und eine Hinterachse 49, an denen jeweils auf Vorderrädern bzw. Hinterrädern angeordnete Reifen 50, 51 als Bodeneingriffsmittel angeordnet sind. Zudem ist eine mit - nicht näher dargestellten - pneumatischen Komponenten ausgestattete Reifendruckregelanlage 52 zur Einstellung und Anpassung eines Reifeninnendrucks p₁, p₂ zumindest eines der Reifen 50, 51 der Zugmaschine 1 vorgesehen. Die pneumatischen Komponenten der Reifendruckregelanlage 52 sind durch individuelle Zuleitungen 54 (einschließlich nicht näher dargestellter Drehdurchführungen) mit den Reifen 50, 51 verbunden. Die Reifendruckregelanlage 52 ermöglicht ein Befüllen oder Entlüften der Reifen 50, 51 der Zugmaschine 1 auch während der Fahrt.

In noch näher zu beschreibender Weise ist der Zugmaschine 1 zur Ansteuerung des Antriebsstranges 5 und der Reifendruckregelanlage 52 ein Fahrerassistenzsystem 6 zugeordnet. Das erfindungsgemäße Fahrerassistenzsystem 6 umfasst zumindest eine Recheneinheit 7, eine Speichereinheit 8 und eine Ein-Ausgabeeinheit 9. Die Recheneinheit 7 verarbeitet von maschineninternen Sensoreinrichtungen 25, 26 sowie von Drucksensoren 53 der Zugmaschine 1 und/oder des Anbaugerätes 3 generierte Informationen 10, externe Informationen 11 und in der Recheneinheit 7 hinterlegbare Informationen 12. Die Drucksensoren 53 erfassen den Reifeninnendruck p₁, p₂ der Reifen 50, 51 zyklisch und übermitteln diesen an das Fahrerassistenzsystem 6. Die von den maschineninternen Sensoreinrichtungen 25, 26 generierten Informationen 10 enthalten Umweltparameter 10a, zu denen unter anderem Bodenart, Bodentyp, Bodenzustand, Bodenfeuchte, Topographie sowie Wetter zählen. Die Umweltparameter 10a liegen zum Teil auch als externe Informationen bzw. externe Umweltparameter 11a vor, was insbesondere für das Wetter oder für Topographiedaten gelten kann.

Zudem sind der Zugmaschine 1 und dem Anbaugerät 3 eine oder mehrere Steuervorrichtungen 13, 14 zur Steuerung und Regelung der Zugmaschine 1 und/oder des jeweiligen Anbaugerätes 3 zugeordnet. Es liegt im Rahmen der Erfindung, dass der Zugmaschine 1 und dem Anbaugerät 3 entweder separate Steuervorrichtungen 13, 14 zur Ansteuerung oder eine gemeinsame Steuereinheit 15 zugeordnet sind. Die gemeinsame Steuereinheit 15 kann dann entweder auf der Zugmaschine 1 oder dem Anbaugerät 3 positioniert oder mobil ausgeführt sein, sodass die gemeinsame Steuereinheit 15 von einer Bedienperson der Zugmaschine 1 mitführbar ist. Es liegt im Rahmen der Erfindung, dass nur die Ein-Ausgabeeinheit 9 mobil ausgestaltet sein kann, sodass sie von der Bedienperson der Zugmaschine 1 mitführbar ist. Denkbar ist auch ein entfernter Betrieb des Fahrerassistenzsystems 6 mittels Remote-Zugriffs. Das Fahrerassistenzsystem 6 kann auch auf einer Daten-Cloud basierend ausgeführt sein, indem Daten statt in der Speichereinheit 8 zumindest teilweise in einer externen, räumlich entfernten Speichervorrichtung eines externen Servers bzw. einer externen Recheneinheit 29 abrufbar und editierbar hinterlegt sind. Die externe Recheneinheit 29 kann Teil eines Daten-Cloudservices sein, welcher von einem Drittanbieter betreibbar ist.

Das Fahrerassistenzsystem 6 umfasst einen kennlinienbasierend arbeitenden Reifendruckregelautomaten 27, welcher eine Optimierung der Einstellung des Reifeninnendruckes p₁, p₂ der Reifen 50, 51 der Zugmaschine 1 bewirkt. Im einfachsten Fall wird dies dadurch bewirkt, dass der Reifendruckregelautomat 27 Steuersignale A generiert, die zumindest der Steuervorrichtung 13 bzw. der Steuereinheit 15 der Zugmaschine 1 zugeführt werden und dort die Ansteuerung der Reifendruckregelanlage 52 der Zugmaschine 1 durch Generierung entsprechender Steuersignale B bewirken.

In Fig. 2 ist schematisch der Antriebsstrang 5 der Zugmaschine 1 dargestellt. Der Antriebsstrang 5 umfasst zumindest einen Antriebsmotor 16, ein Getriebe 17, zumindest einen Nebenabtrieb 18 und zumindest ein Nebenaggregat 19. Der Antriebsmotor 16 ist als Verbrennungsmotor ausgeführt. Der Antriebsmotor 16 wird durch ein Motorsteuergerät 20 angesteuert. Das Getriebe 17 ist als Lastschaltgetriebe oder als stufenloses Getriebe ausgeführt. Das Getriebe 17 wird durch ein Getriebesteuergerät 21 angesteuert. Der zumindest eine Nebenabtrieb 18 ist als eine Zapfwelle ausgeführt, die dem Antrieb des Anbaugerätes 3 dient. Das zumindest eine Nebenaggregat 19 kann als Motorlüfter ausgebildet sein, welcher Teil einer Kühlvorrichtung des Antriebsmotors 16 ist. Weiterhin kann der Antriebsstrang 5 einen Hydraulikantriebsstrang 22 und/oder einen elektrischen Antriebsstrang 23 aufweisen. Dabei können beispielsweise eine Hydraulikpumpe und ein Hydraulikmotor oder ein Generator sowie ein Elektromotor weitere Nebenaggregate 19 des Antriebsstranges 5 bilden. Der Hydraulikantriebsstrang 22 dient beispielsweise zum Betreiben eines Hubkrafthebers 24, mit welchem das Anbaugerät 3 an die Zugmaschine 1 adaptiert wird.

Dem Antriebsstrang 5 sind Sensoreinrichtungen 25 zugeordnet sind, die zur Bestimmung von Betriebsparametern des Antriebsstranges 5 respektive dessen unterschiedlichen Komponenten eingerichtet sind. Dabei kann es sich bei den Sensoreinrichtungen 25 beispielsweise um einen Drehzahlsensor, einen Drehmomentsensor, einen Drucksensor oder einen Kraftsensor handeln. Die Sensoreinrichtungen 25 zur Bestimmung von Betriebsparametern des Antriebsstranges 5 sind dem Antriebsstrang 5 unmittelbar zugeordnet. Weiterhin können der Zugmaschine 1 und/oder dem Anbaugerät 3 zusätzliche Sensoreinrichtungen 26 zugeordnet sein, die zur Bestimmung von spezifischen Betriebsparametern der Zugmaschine 1 und/oder des Anbaugerätes 3 eingerichtet sind, die auch unabhängig vom Antriebsstrang 5 bestimmbar sind. Dabei kann es sich bei einer der zusätzlichen Sensoreinrichtungen 26 beispielsweise um einen Geschwindigkeitssensor, einen Neigungssensor, einen optischen Sensor und/oder einen Positionsortungssensor handeln. Des Weiteren kann zumindest eine der zusätzlichen Sensoreinrichtungen 26 zum Empfang und/oder zur Bestimmung von satellitenbasierten oder satellitengestützen Informationen, wie Geodaten oder Bewuchsdaten eingerichtet sein, bei denen es sich um externe Informationen 11 sowie in der Recheneinheit 7 hinterlegte Informationen 12 wie topographische Daten, Routenplanungsdaten und dergleichen mehr handeln kann. Darüber hinaus kann zumindest eine der zusätzlichen Sensoreinrichtungen 26 zur Bestimmung von Daten eingerichtet sein, die einen Rückschluss auf die Bodenbeschaffenheit des Bodens bzw. Untergrunds ermöglichen, auf dem die Zugmaschine 1 bewegt wird.

Die Sensoreinrichtungen 25 des Antriebsstranges 5 als auch die weiteren Sensoreinrichtungen 26 sowie Drucksensoren 53 der Zugmaschine 1 und/oder des Anbaugerätes 3 übermitteln die generierten Informationen 10 mittelbar oder unmittelbar an das Fahrerassistenzsystem 6. Die Recheneinheit 7 ist zur Auswertung der Informationen 10 eingerichtet. Die Kommunikation zwischen dem Motorsteuergerät 20, dem Getriebesteuergerät 21, den Sensoreinrichtungen 25, 26 sowie den separaten Steuervorrichtungen 13, 14 bzw. der Steuereinheit 15 und dem Fahrerassistenzsystem 6 kann über verschiedene Kommunikationswege, wie beispielsweise ein Bussystem der Zugmaschine 1 oder des Anbaugerätes 3 oder ein drahtloses Kommunikationssystem, erfolgen.

Die Reifendruckregelanlage 52 bildet zusammen mit dem Fahrerassistenzsystem 6 den Reifendruckregelautomaten 27. Dabei kann das Fahrerassistenzsystem 6 ein dem Reifendruckregelautomaten 27 zugeordnetes Regelwerk 28 umfassen welches eine Optimierung der Arbeitsweise der Zugmaschine 1 durch eine optimierte Ansteuerung der Reifendruckregelanlage 52 bewirkt. Der kennlinienbasierend arbeitende Reifendruckregelautomat 27 ist hierbei für eine optimierte Ansteuerung der Reifendruckregelanlage 52 in Abhängigkeit von in der Speichereinheit 8 hinterlegten auswählbaren Regelstrategien 30 und/oder Optimierungszielgrößen 33 eingerichtet. Somit wird das Gesamtsystem respektive die Maschinenanordnung aus Zugmaschine 1 und Anbaugerät 3 auf Basis einer Einstellung der Reifeninnendrücke p₁, p₂ ganzheitlich optimiert und nicht wie bisher alleinig auf Basis des Halbwissens einer Bedienperson 39 über das Betriebsverhalten der Reifen 50, 51 bei verschiedenen Reifeninnendrücken p₁, p₂. Der Reifendruckregelautomat 27 ist zur automatischen Ermittlung des Reifeninnendruckes p₁, p₂ eingerichtet, welcher für aktuell herrschende Traktionsbedingungen und unter Berücksichtigung der ausgewählten Regelstrategie 30 und/oder Optimierungszielgröße(n) 33 zu einem maximalen Traktionswirkungsgrad führt.

Weiter liegt es im Rahmen der Erfindung, dass das Regelwerk 28 zur Optimierung der Ansteuerung der Reifendruckregelanlage 52 in der der Zugmaschine 1 zugeordneten, vorzugsweise als Jobrechner ausgeführten, Steuervorrichtung 13 hinterlegt ist. Es liegt zudem im Rahmen der Erfindung, dass das benötigte Regelwerk 28 auch zentral auf einer nicht näher erläuterten externen Recheneinheit 29 oder einem sonstigen Backendsystem, beispielsweise auf einer Daten-Cloud basierend, hinterlegt sein kann und durch eine, insbesondere bidirektionale, Kommunikationsverbindung zwischen der Zugmaschine 1 und der Recheneinheit 29 abrufbar ist.

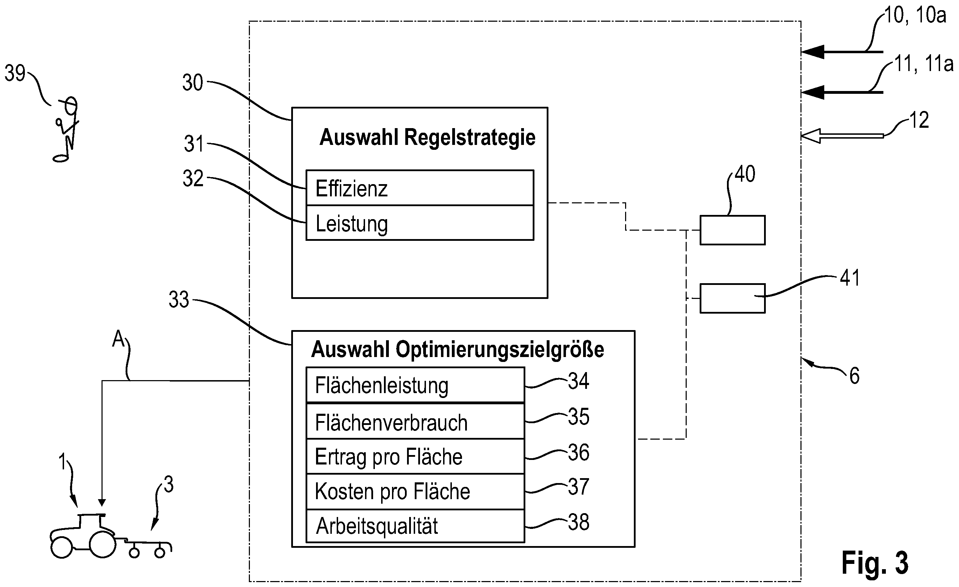

Die Darstellung in Fig. 3 zeigt eine Detailansicht des Fahrerassistenzsystems 6 der Zugmaschine 1 respektive des Traktors 2, wobei Visualisierungs-, Bedien- und strukturelle Aspekt in ein und derselben Darstellung zusammengefasst sind. Zur Optimierung der Arbeitsweise der Reifendruckregelanlage 52 der Zugmaschine 1 umfasst das Fahrerassistenzsystem 6 auswählbare Regelstrategien 30, wobei die auswählbaren Regelstrategien 30 zugmaschinenspezifische Strategien, anbaugerätespezifische Strategien und/oder eine Kombination aus beiden sein können. Eine effiziente Optimierung der Ansteuerung der Reifendruckregelanlage 52 der Zugmaschine 1 unter Berücksichtigung des adaptierten Anbaugerätes 3 ergibt sich dann, wenn die auswählbaren Regelstrategien 30 zumindest eine der Regelstrategien "Effizienz" 31, "Leistung" 32 umfassen. Mit der Regelstrategie "Effizienz" 31 wird durch eine rad- und/oder achsspezifische Variation des Reifeninnendruckes p₁, p₂ der Reifen 50, 51 eine Optimierung des Kraftstoffverbrauchs pro Flächeneinheit durchgeführt, d.h. ein Betrieb der Zugmaschine 1 und des daran adaptierten Anbaugerätes 3 im Bereich des minimal möglichen Kraftstoffverbrauchs. Mit der Regelstrategie "Leistung" 32 wird eine Optimierung der Flächenleistung durch eine rad- und/oder achsspezifische Variation des Reifeninnendruckes p₁, p₂ der Reifen 50, 51 durchgeführt.

Weiterhin umfasst das Fahrerassistenzsystem 6 zur Optimierung der Arbeitsweise der Zugmaschine 1 durch die optimierte Ansteuerung der Reifendruckregelanlage 52 auswählbare Optimierungszielgrößen 33. Die Optimierungszielgrößen 33 sind alternativ oder zusätzlich zu den Regelstrategien 30 durch eine Bedienperson 39 auswählbar.

Das Fahrerassistenzsystem 6 kann zudem so beschaffen sein, dass es entweder in einem Dialogmodus 40 mit der Bedienperson 39 oder in einem Automatikmodus 41 betrieben werden kann. In beiden Fällen findet die Kommunikation, der Dialog mit der Bedienperson 39, natürlichsprachig statt.

Die Optimierungszielgrößen 33 können "Flächenleistung" 34, "Flächenverbrauch" 35, "Ertrag pro Fläche" 36, "Kosten pro Fläche" 37 und/oder "Arbeitsqualität" 38 sein. Die Optimierungszielgröße 33 "Flächenleistung" 34 kann beispielsweise vordergründig auf die Steigerung der bearbeiteten Fläche und/oder verarbeiteten Masse landwirtschaftlicher Güter pro Zeiteinheit (ha/h) gerichtet sein. Die Optimierungszielgröße 33 "Flächenverbrauch" 35 zielt auf eine Minimierung des Kraftstoffverbrauchs je Flächeneinheit (l/ha) ab. Die Optimierungszielgröße 33 "Ertrag pro Fläche" 36 zielt auf eine Maximierung des Ertrags ab. Die Optimierungszielgröße 33 "Kosten pro Fläche" 37 kann beispielsweise vordergründig anfallende Personalkosten, Kraftstoffkosten, Verschleißkosten, Betriebsstunden und dergleichen mehr berücksichtigen. Die Optimierungszielgröße 33 "Arbeitsqualität" 38 stellt beispielsweise die Einmischung von Ernterückständen, die Krümelung, die Rückverfestigung, die Futterqualität und dergleichen mehr bei der Ansteuerung der Reifendruckregelanlage 52 in den Vordergrund.

Die Reifendruckregelanlage 52 bildet zusammen mit dem Fahrerassistenzsystem 6 den Reifendruckregelautomaten 27, indem die Recheneinheit 7 des Fahrerassistenzsystem 6 dazu eingerichtet ist, zur Umsetzung der jeweils ausgewählten Regelstrategie 30 und/oder Optimierungszielgröße 33 Betriebsparameter des Antriebsstranges 5, der Zugmaschine 1, des Anbaugerätes 3 sowie Umweltparameter 10a aus aktuell vorherrschenden Umgebungsbedingungen autonom zu bestimmen bzw. zu ermitteln und der Reifendruckregelanlage 52 vorzugeben. Dies kann durch das Übermitteln der Steuersignale A an die Steuervorrichtung 13 bzw. Steuereinheit 15 erfolgen, welche daraufhin ein entsprechendes Steuersignal B an die Reifendruckregelanlage 52 übermittelt.

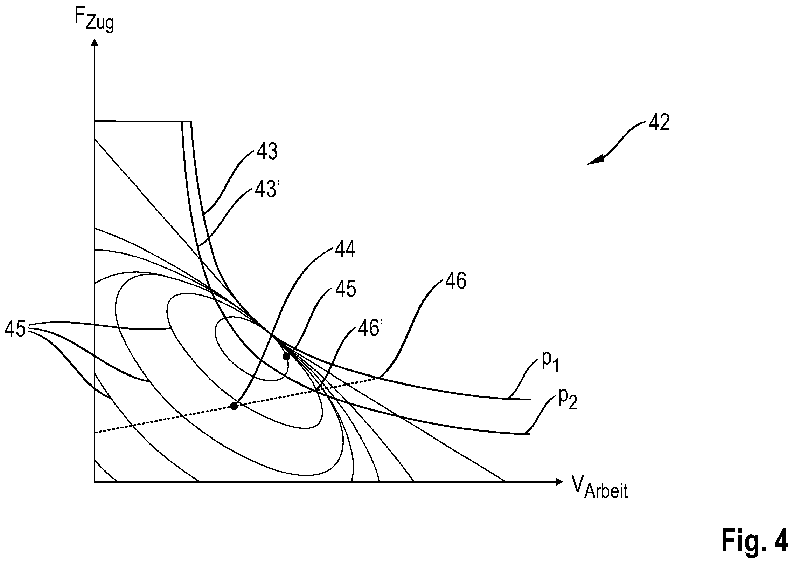

Der Reifendruckregelautomat 27 ist für eine optimierte Ansteuerung der Reifendruckregelanlage 52 in Abhängigkeit von den in der Speichereinheit 8 hinterlegten auswählbaren Regelstrategien 30 und/oder Optimierungszielgrößen 33 eingerichtet. Der Reifendruckregelautomat 27 des Fahrerassistenzsystems 6 arbeitet kennlinienbasierend. Hierzu ist in der Speichereinheit 8 zumindest ein n-dimensionales Kennfeld 42 hinterlegt, welches anhand der Darstellung gemäß der Fig. 4 noch näher erläutert wird. Das zumindest eine n-dimensionale Kennfeld 42 ist Teil des Regelwerkes 28. Hierzu variiert der Reifendruckregelautomat 27 den Reifeninnendruck p₁, p₂ der Reifen 50, 51 rad- und/oder achsspezifisch und optimiert dabei den "Flächenverbrauch" 35 - Kraftstoffverbrauch pro Fläche (l/ha) - und/oder die "Flächenleistung" 34 - bearbeitete Fläche pro Stunde (ha/h) - über den Reifeninnendruck p₁, p₂ unter Berücksichtigung der ermittelten Betriebsparameter und Umweltparameter 10a.

Fig. 4 zeigt exemplarisch ein n-dimensionales Kennfeld 42 zur Ansteuerung der Reifendruckregelanlage 52. In der Speichereinheit 8 ist ein funktionales Modell der Zugmaschine 1 und des Anbaugerätes 3 hinterlegt, welches zumindest einen Teil der funktionalen Zusammenhänge der Zugmaschine 1 und des adaptierten Anbaugerätes 3 abbildet. Denkbar sind auch reine Black-Box-Modelle, die beispielsweise auf Künstlicher Intelligenz (KI) oder neuronalen Netzwerken basieren, oder Mischformen, um zumindest einen Teil der funktionalen Zusammenhänge der Zugmaschine 1 und des Anbaugerätes 3 abzubilden. Zur Abbildung der funktionalen Zusammenhänge der Zugmaschine 1 und des Anbaugerätes 3 ist dem Betriebsparameter Reifeninnendruck p₁, p₂ das mindestens eine n-dimensionale Kennfeld 42 zugeordnet, wobei der Reifeninnendruck p₁, p₂ als Ausgangsgröße des mindestens einen n-dimensionalen Kennfeldes 42 definiert ist.

In dem Kennfeld 42 sind als Eingangsgrößen die Arbeitsgeschwindigkeit v_{Arbeit} über die Zugkraft F_{Zug} aufgetragen. Die Ausgangsgröße bildet der Reifeninnendruck p₁, p₂. Mit Bezugszeichen 43, 43' sind die Zugkraftkennlinien der Zugmaschine 1 bei unterschiedlichen Reifeninnendrücken p₁, p₂ und mit Bezugszeichen 44 die Zugkraftkennlinie des Anbaugeräts 3 bezeichnet, die in dem Kennfeld 42 jeweils exemplarisch dargestellt sind. Weiterhin sind Linien 45 konstanten spezifischen Kraftstoffverbrauchs in Form von sogenannten "Muschelkennlinien" im Hintergrund dargestellt. Der jeweilige Schnittpunkt der Zugraftkennlinie 44 des Anbaugerätes 3 mit der Zugraftkennlinie 43 bzw. 43' der Zugmaschine 1 definiert einen sich bei Volllast bei verschiedenen Einstellungen des Reifeninnendrucks p₁, p₂ ergebenden Betriebspunkt 46 bzw. 46'. Die Linien 45 konstanten spezifischen Kraftstoffverbrauchs können bei bekannter Konfiguration des Antriebsstranges 5 für einen spezifischen Betriebszustand berechnet werden. Ein spezifischer Betriebszustand kann durch Betriebsparameter der Zugmaschine 1, insbesondere des Antriebsstranges 5, des zumindest eines Nebenaggregates 19 des Antriebsstranges 5, des Anbaugerätes 3 und/oder aus den Umgebungsbedingungen resultierenden Umweltparametern 10a, 11a, zu denen unter anderem Bodenart, Bodentyp, Bodenzustand, Bodenfeuchte, Topographie sowie Wetter zählen, festgelegt werden. Die Betriebsparameter des Antriebsstranges 5, des zumindest eines Nebenaggregates 19, des Anbaugerätes 3, des Hydraulikantriebsstranges 22, des elektrischen Antriebsstranges 23 und/oder anhand der aktuell vorherrschenden Umgebungsbedingungen bestimmten Umweltparameter 10a. 11a bilden die zur optimierten Ansteuerung der Reifendruckregelanlage 52 und somit zur optimalen Einstellung des jeweiligen Reifeninnendruckes Reifeninnendruck p₁, p₂ zu berücksichtigenden Parameter.

Das Ändern der Reifeninnendrücke p₁, p₂ hat einen Einfluss auf die Lage der Zugkraftkennlinie 43, 43' in dem Kennfeld 42 und damit auf die übertragene Leistung. Die Linien konstanten spezifischen Energieverbrauchs können bei bekannter Antriebsstrangkonfiguration für einen Betriebszustand berechnet werden. Relevante Betriebszustände können im beschriebenen Ausführungsbeispiel beispielsweise definiert sein durch:
- Unterschiedliche Motordrückung
- Unterschiedliche Reifeninnendrücke
- Unterschiedliche Ansteuerung eines Nebenaggregates 19
- Ausgangsleistung des Antriebsmotors 16
- Ausgangsleistung des Getriebes 17 bzw. Getriebeauslastung
- Antriebsleistung eines Nebenverbrauchers ermittelt aus der Differenz von Motorausgangsleistung und Ausgangsleistung des Getriebes unter Berücksichtigung des Getriebewirkungsgradkennfelds
- Leistungsfluss im Nebenabtrieb
- Leistungsfluss im Hydraulikantriebsstrang 22
- Leistungsfluss im elektrischen Antriebsstrang 23
- Hubposition des Hubkrafthebers 24/ Arbeitstiefe des Anbaugerätes 3
- Schlupf
- Signale der Zugkraftmessbolzen des Hubkrafthebers 24
- Neigungswinkel des Traktors

Die Betriebsparameter des Antriebsstranges 5 umfassen unter anderem die Ausgangsleistung des zumindest einen Antriebsmotors 16, die Ausgangsleistung des Getriebes 17 bzw. die Getriebeauslastung, die Antriebsleistung des zumindest einen Nebenaggregates 19 und/oder des zumindest einen Nebenabtriebs 18, den Schlupf, die Motordrehzahl, die Fahrgeschwindigkeit, die Getriebeübersetzung, der Status von Allradantrieb und/oder Differentialsperre und/oder den Leistungsfluss im Antriebsstrang des Nebenabtriebs 18, im Hydraulikantriebsstrang 22 oder im elektrischen Antriebsstrang 23. So kann beispielsweise die Antriebsleistung zumindest einen Nebenaggregates 19 aus der Differenz von Ausgangsleistung des Antriebsmotors 16 und der Ausgangsleistung des Getriebes 17 unter Berücksichtigung des Getriebewirkungsgradkennfeldes ermittelt werden.

Weitere Betriebsparameter der Zugmaschine 1 sind unter anderem ein Neigungswinkel der Zugmaschine 1 in Quer- und Längsrichtung, Gewicht der Zugmaschine 1, Ballastierung, Reifengröße und Reifentyp der Reifen 50, 51 an den Achsen 48, 49, Achslasten, Radkräfte, Raddrehmomente, Traktionsparameter, welche sensorisch von einer der Sensoreinrichtungen 25, 26 erfasst werden oder aus von den Sensoreinrichtungen 25, 26 erfassten oder sonstigen empfangenen oder hinterlegten Daten berechnet werden können.

Des Weiteren können die Betriebsparameter des Anbaugerätes 3 die Art und/oder den Typ des Anbaugerätes 3, die Arbeitsbreite, die Hubposition, die Arbeitstiefe sowie weitere Einstellparameter des Anbaugerätes 3, beispielsweise Vorderfurchenbreite, Zugpunkt, Auflagedruck und dergleichen mehr, umfassen.

Die Umweltparameter 10a, 11a bilden unter anderem Bodenart, Bodentyp, Bodenzustand, Bodenfeuchte, die Topographie, das Wetter und dergleichen mehr.

Mit der Regelstrategie "Effizienz" wird eine Optimierung des Kraftstoffverbrauchs pro Flächeneinheit durchgeführt, wobei der Betriebspunkt 46, 46' im n-dimensionalen Kennfeld 42 unter Berücksichtigung der Betriebsparameter und Umweltparameter 10a im Bereich des minimal möglichen spezifischen Kraftstoffverbrauchs liegt. Mit der Regelstrategie "Leistung" wird eine Optimierung der Flächenleistung durchgeführt, wobei der Betriebspunkt 46. 46' im n-dimensionalen Kennfeld 42 unter Berücksichtigung der der Betriebsparameter und Umweltparameter 10a im Bereich maximaler Motorleistung liegt. Dazu werden entsprechend der jeweiligen Regelstrategie die Reifeninnendrücke p₁, p₂ durch Ansteuerung der Reifendruckregelanlage 52 variiert.

Gemäß dem in Fig. 4 beispielhaft dargestellten Kennfeld 42 wird durch den Reifendruckregelautomaten 27 die Optimierungszielgröße "Flächenverbrauch" dadurch optimiert, dass der Reifeninnendruck p₁ auf den Reifeninnendruck p₂ verändert wird, so dass sich ein Betriebspunkt 46' einstellt, der auf der Kennlinie 44 des Zugkraftbedarfs des Anbaugerätes 3 unter Volllast näher am Bereich des minimal möglichen spezifischen Kraftstoffverbrauchs im Kennfeld 42 liegt.

Die Recheneinheit 7 kann das mindestens eine n-dimensionale Kennfeld 42 im laufenden Betrieb, insbesondere zyklisch, mit den Einsatzbedingungen der Zugmaschine 1 abgleichen. Hierzu kann vorzugsweise in der Speichereinheit 8 mindestens ein n-dimensionales Initialkennfeld 42` hinterlegt sein. Somit kann die Recheneinheit 7 des Fahrerassistenzsystems 6 bei der ersten Ermittlung des Reifeninnendruckes p₁, p₂ die Ermittlung basierend auf dem Initialkennfeld 42' vornehmen.

Des Weiteren kann die Recheneinheit 7 dazu eingerichtet sein, eine Anpassung der Ausprägung des Initialkennfeldes 42' an bestehende Einsatzbedingungen durch die Verwendung gemessener Betriebsparameter und Umweltparameter 10a oder das Anfahren von Stützstellen im Initialkennfeld 42' durchzuführen. Ausgehend von dem Initialkennfeld 42' kann durch das Einstellen von vordefinierten Betriebspunkten, die Stützstellen in dem Kennfeld 42 darstellen, die Ausprägung des Kennfeldes 42 an die aktuellen Einsatzbedingungen angepasst werden. Hierzu werden in einem ersten Schritt Bemessungswerte respektive Betriebsparameter sowie Umweltparameter 10a mittels der jeweiligen Sensoreinrichtungen 25, 26, 53 akquiriert sowie als externe Information 11 empfangen und durch die Recheneinheit 7 vorverarbeitet. Sind die Bemessungswerte, beispielsweise Drehzahlen, Kräfte, Schlupf, Fahrgeschwindigkeit, quasistationär, so werden diese in das n-dimensionale Initialkennfeld 42' eingetragen. Wenn im n-dimensionalen Raum des Initialkennfeldes 42' einzelne durch die Sensoreinrichtungen 25, 26 bestimmte Bemessungswerte fehlen, weil diese bei regulärer Feldfahrt oder Straßenfahrt nicht auftreten oder nur unzureichend vorliegen, da diese im standardmäßigen Betrieb der Zugmaschine 1 nicht angefahren werden, können stattdessen spezifische Stützstellen aktiv angefahren werden. Der zweite Schritt umfasst die Prüfung und Adaption des funktionalen Modells von Zugmaschine 1 und Anbaugerät 3 auf Basis von Änderungen der aktuellen Einsatzbedingungen, die wiederum mittels der Betriebsparameter sowie Umweltparameter 10a bestimmt werden.

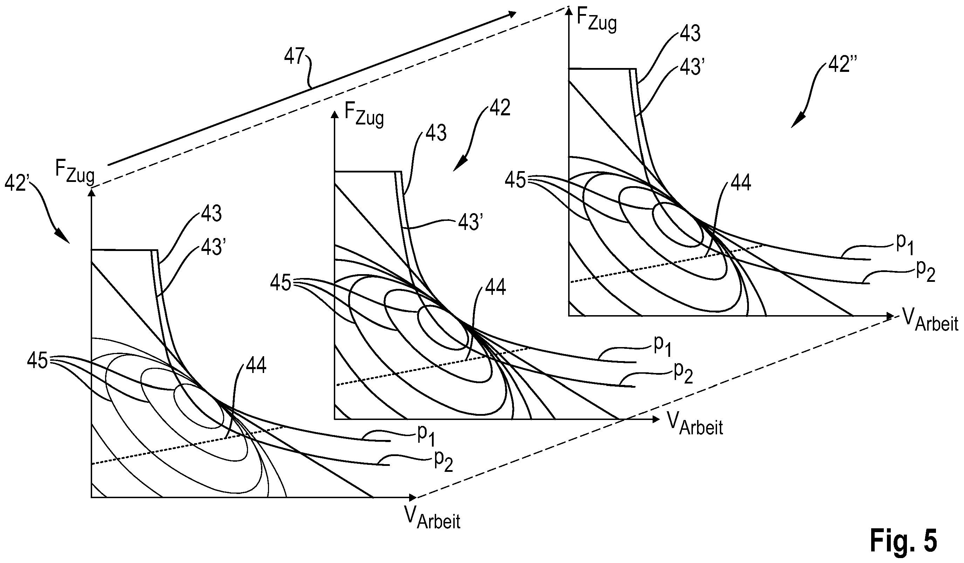

Die Darstellung in Fig. 5 zeigt lediglich exemplarisch ein n-dimensionales Initialkennfeld 42', welches beispielhaft aufgrund einer Änderung zumindest eines Betriebsparameters im Antriebsstrang 5 adaptiert wird. Bei dem Betriebsparameter handelt es sich beispielhaft um die Drehzahl des als Motorlüfter ausgeführten Nebenaggregates 19, welche im Betrieb in Abhängigkeit von der Belastung des Antriebsmotors 16 ansteigt, wie in Fig. 5 durch den Pfeil 47 veranschaulicht ist. Die Zunahme 47 der Drehzahl des Motorlüfters führt zu einer Adaption des Initialkennfeldes 42' hin zum Kennfeld 42 bzw. adaptierten Kennfeld 42".

**Bezugszeichenliste**

| | | | |
|---|---|---|---|
| 1 | Zugmaschine | 29 | Externe Recheneinheit |
| 2 | Traktor | 30 | Regelstrategie |
| 3 | Anbaugerät | 31 | Effizienz |
| 4 | Bodenbearbeitungsgerät | 32 | Leistung |
| 5 | Antriebsstrang | 33 | Optimierungszielgröße |
| 6 | Fahrerassistenzsystem | 34 | Flächenleistung |
| 7 | Recheneinheit | 35 | Flächenverbrauch |
| 8 | Speichereinheit | 36 | Ertrag pro Fläche |
| 9 | Ein-Ausgabeeinheit | 37 | Kosten pro Fläche |
| 10 | Information | 38 | Arbeitsqualität |
| 1a | Umweltparameter | 39 | Bedienperson |
| 11 | Externe Information | 40 | Dialogmodus |
| 11a | Externe Umweltparameter | 41 | Automatikmodus |
| 12 | Information | 42 | Kennfeld |
| 13 | Steuervorrichtung | 42' | Initialkennfeld |
| 14 | Steuervorrichtung | 42" | Adaptiertes Kennfeld |
| 15 | Steuereinheit | 43 | Zugkraftkennlinie bei p₁ |
| 16 | Antriebsmotor | 43' | Zugkraftkennlinie bei p₂ |
| 17 | Getriebe | 44 | Zugkraftkennlinie von 3, 4 |
| 18 | Nebenabtrieb | 45 | Linie konstanten Kraftstoffverbrauchs |
| 19 | Nebenaggregat | 46 | Betriebspunkt |
| 20 | Motorsteuergerät | 46' | Betriebspunkt |
| 21 | Getriebesteuergerät | 47 | Pfeil |
| 22 | Hydraulikantriebsstrang | 48 | Vorderachse |
| 23 | Elektrischer Antriebsstrang | 49 | Hinterachse |
| 24 | Hubkraftheber | 50 | Reifen |
| 25 | Sensoreinrichtung | 51 | Reifen |
| 26 | Sensoreinrichtung | 52 | Reifendruckregelanlage |
| 27 | Reifendruckregelautomat | 53 | Drucksensor |
| 28 | Regelwerk | 54 | Zuleitung |
| F_{Zug} | Zugkraft von 1 | A | Steuersignal |
| p₁ | Reifeninnendruck | B | Steuersignal |
| p₂ | Reifeninnendruck | | |
| v_{Arbeit} | Arbeitsgeschwindigkeit | | |

## Patentansprüche

1. Zugmaschine (1), insbesondere Traktor (2), mit einem Antriebsstrang (5) und einer Reifendruckregelanlage (52) zur Einstellung und Anpassung eines Reifeninnendrucks (p₁, p₂) zumindest eines Reifens (50, 51) der Zugmaschine (1) sowie mit wenigstens einem an die Zugmaschine (1) adaptierten Anbaugerät (3,4), wobei der Antriebsstrang (5) zumindest einen Antriebsmotor (16), ein Getriebe (17), zumindest einen Nebenabtrieb (18) und zumindest ein Nebenaggregat (19) umfasst, wobei die Zugmaschine (1) zur Ansteuerung der Reifendruckregelanlage (52) ein Fahrerassistenzsystem (6) aufweist, welches mit einer Recheneinheit (7), einer Speichereinheit (8) sowie einer Ein-Ausgabeeinheit (9) ausgeführt ist, wobei das Fahrerassistenzsystem (6) einen kennlinienbasierend arbeitenden Reifendruckregelautomaten (27) umfasst, wobei der Reifendruckregelautomat (27) für eine optimierte Ansteuerung der Reifendruckregelanlage (52) in Abhängigkeit von in der Speichereinheit (8) hinterlegten auswählbaren Regelstrategien (30) und/oder Optimierungszielgrößen (33) eingerichtet ist, **dadurch gekennzeichnet, dass** der Reifendruckregelautomat (27) derart eingerichtet ist, dass der Reifendruckregelautomat (27) Steuersignale (A) generiert, die zumindest einer Steuervorrichtung (13, 15) der Zugmaschine (1) zugeführt werden und dort die Ansteuerung der Reifendruckregelanlage (52) der Zugmaschine (1) durch Generierung entsprechender Steuersignale (B) bewirken.

2. Zugmaschine (1) nach Anspruch 1, **dadurch gekennzeichnet, dass** die Reifendruckregelanlage (52) zusammen mit dem Fahrerassistenzsystem (6) den Reifendruckregelautomaten (27) bildet, indem die Recheneinheit (7) dazu eingerichtet ist, zur Umsetzung der jeweils ausgewählten Regelstrategie (30) und/oder Optimierungszielgröße (33) den einzustellenden Reifeninnendruck (p₁, p₂) beeinflussende Parameter autonom zu ermitteln und der Reifendruckregelanlage (52) vorzugeben.

3. Zugmaschine (1) nach einem der Ansprüche 1 oder 2, **dadurch gekennzeichnet, dass** die auswählbare Regelstrategie (30) zumindest eine Regelstrategie "Effizienz" (31) oder "Leistung" (32) umfasst.

4. Zugmaschine (1) nach einem der Ansprüche 1 bis 3, **dadurch gekennzeichnet, dass** die Optimierungszielgrößen (33) "Flächenleistung" (34), "Flächenverbrauch" (35), "Ertrag pro Fläche" (36), "Kosten pro Fläche" (37) und/oder "Arbeitsqualität" (38) sind.

5. Zugmaschine (1) nach einem der vorhergehenden Ansprüche, **dadurch gekennzeichnet, dass** der Reifendruckregelautomat (27) dazu eingerichtet ist, den Traktionswirkungsgrad der Zugmaschine (1) in Abhängigkeit von der ausgewählten Regelstrategie (30) und/oder Optimierungszielgröße (33) zu optimieren.

6. Zugmaschine (1) nach einem der vorhergehenden Ansprüche, **dadurch gekennzeichnet, dass** der Reifendruckregelautomat (27) dazu eingerichtet ist, den Reifeninnendruck (p₁, p₂) rad- und/oder achsspezifisch und/oder gesamtheitlich zu optimieren.

7. Zugmaschine (1) nach einem der vorangehenden Ansprüche, **dadurch gekennzeichnet, dass** die zur optimierten Ansteuerung der Reifendruckregelanlage (52) zu berücksichtigenden Parameter Betriebsparameter der Zugmaschine (1), des Antriebsstranges (5), des Anbaugerätes (3, 4) und/oder aus Umgebungsbedingungen resultierende Umweltparameter (10a, 11a) sind.

8. Zugmaschine (1) nach Anspruch 7, **dadurch gekennzeichnet, dass** zumindest an der Zugmaschine (1) Sensoreinrichtungen (25, 26, 53) angeordnet sind, die zur Bestimmung von Betriebsparametern und/oder Umweltparametern (10a, 11a) eingerichtet sind.

9. Zugmaschine (1) nach einem der Ansprüche 7 oder 8, **dadurch gekennzeichnet, dass** die Betriebsparameter der Zugmaschine (1) die Ausgangsleistung des zumindest einen Antriebsmotors (16), die Ausgangsleistung des Getriebes (17) bzw. die Getriebeauslastung, die Antriebsleistung des zumindest einen Nebenaggregates (19) und/oder des zumindest einen Nebenabtriebes (18), den Schlupf, die Fahrgeschwindigkeit, die Getriebeübersetzung den Leistungsfluss im Hydraulikantriebsstrang, den Anbaugerätetyp und/oder Einstellparameter des Anbaugerätes (3, 4) umfassen.

10. Zugmaschine (1) nach einem der vorangehenden Ansprüche, **dadurch gekennzeichnet, dass** in der Speichereinheit ein funktionales Modell der Zugmaschine (1) und des Anbaugerätes (3, 4) hinterlegt ist, welches zumindest einen Teil der funktionalen Zusammenhänge der Zugmaschine (1) und des Anbaugerätes (3, 4) abbildet.

11. Zugmaschine (1) nach einem der vorangehenden Ansprüche, **dadurch gekennzeichnet, dass** zur Abbildung der funktionalen Zusammenhänge der Zugmaschine (1) dem Betriebsparameter Reifeninnendruck (p₁, p₂) mindestens ein n-dimensionales Kennfeld (42) zugeordnet ist, wobei der Reifeninnendruck (p₁, p₂) als Ausgangsgröße des mindestens einen n-dimensionalen Kennfeldes (42) definiert ist.

12. Zugmaschine (1) nach Anspruch 11, **dadurch gekennzeichnet, dass** zumindest ein oder mehrere Betriebsparameter der Zugmaschine (1), des Anbaugerätes (3, 4) und/oder aus den Umgebungsbedingungen resultierende Umweltparameter (10a, 11a) die Eingangsgrößen des mindestens einen n-dimensionalen Kennfeldes (42) sind.

13. Zugmaschine (1) nach einem der Ansprüche 11 oder 12, **dadurch gekennzeichnet, dass** die Recheneinheit (7) das mindestens eine n-dimensionale Kennfeld (42) in Abhängigkeit von der ausgewählten Regelstrategie (30) und/oder Optimierungszielgröße (33) auswählt und der Ermittlung des Reifeninnendrucks (p₁, p₂) zugrunde legt.

14. Zugmaschine (1) nach einem der Ansprüche 11 bis 13, **dadurch gekennzeichnet, dass** die Recheneinheit (7) das mindestens eine n-dimensionale Kennfeld (42) im laufenden Betrieb, insbesondere zyklisch, mit den Einsatzbedingungen der Zugmaschine (1) abgleicht, vorzugsweise, dass in der Speichereinheit (8) mindestens ein n-dimensionales Initialkennfeld (42') hinterlegt ist, und dass bei der ersten Ermittlung des Reifeninnendrucks (p₁, p₂) die Recheneinheit (7) die Ermittlung basierend auf dem Initialkennfeld (42') vornimmt.

15. Zugmaschine (1) nach Anspruch 14, **dadurch gekennzeichnet, dass** die Recheneinheit (7) dazu eingerichtet ist, eine Anpassung der Ausprägung des Initialkennfeldes (42') an bestehende Einsatzbedingungen durch die Verwendung gemessener Betriebsparameter zumindest der Zugmaschine (1) oder das Anfahren von Stützstellen im Initialkennfeld (42') durchzuführen.

16. Fahrerassistenzsystem (6) mit einem Reifendruckregelautomaten (27) zur Verwendung mit einer Zugmaschine (1, 2), wobei das Fahrerassistenzsystem (6) mit einer Recheneinheit (7), einer Speichereinheit (8) sowie einer Ein-Ausgabeeinheit (9) ausgeführt ist, wobei der Reifendruckregelautomat (27) kennlinienbasierend arbeitend eingerichtet ist, wobei der Reifendruckregelautomat (27) für eine optimierte Ansteuerung einer Reifendruckregelanlage (52) der Zugmaschine (1, 2) in Abhängigkeit von in der Speichereinheit (8) hinterlegten auswählbaren Regelstrategien (30) und/ oder Optimierungszielgrößen (33) eingerichtet ist, **dadurch gekennzeichnet, dass** der Reifendruckregelautomat (27) derart eingerichtet ist, dass der Reifendruckregelautomat (27) Steuersignale (A) generiert, die zumindest einer Steuervorrichtung (13, 15) der Zugmaschine (1) zuführbar sind, um dort die Ansteuerung der Reifendruckregelanlage (52) der Zugmaschine (1) durch Generierung entsprechender Steuersignale (B) zu bewirken.

17. Fahrerassistenzsystem (6) nach Anspruch 16, **dadurch gekennzeichnet, dass** das Fahrerassistenzsystem (6) auf einem Daten-Cloudservice basierend ausgeführt ist.

18. Fahrerassistenzsystem (6) nach Anspruch 16 oder 17, **dadurch gekennzeichnet, dass** das Fahrerassistenzsystem (6) ein mobiles Datenübertragungsgerät umfasst.

19. Verfahren zum Betreiben einer Zugmaschine (1), insbesondere eines Traktors (2), mit einem Antriebsstrang (5) und einer Reifendruckregelanlage (52) zur Einstellung und Anpassung eines Reifeninnendrucks (p₁, p₂) zumindest eines Reifens (50, 51) der Zugmaschine (1) sowie mit wenigstens einem an die Zugmaschine (1) adaptierten Anbaugerät (3,4), wobei der Antriebsstrang (5) zumindest einen Antriebsmotor (16), ein Getriebe (17), zumindest einen Nebenabtrieb (18) und zumindest ein Nebenaggregat (19) umfasst, wobei die Zugmaschine (1) durch ein Fahrerassistenzsystem (6) angesteuert wird, welches mit einer Recheneinheit (7), einer Speichereinheit (8) sowie einer Ein-Ausgabeeinheit (9) ausgeführt ist, wobei die Reifendruckregelanlage (52) durch einen kennlinienbasierend arbeitenden Reifendruckregelautomaten (27) des Fahrerassistenzsystems (6) angesteuert wird, wobei der Reifendruckregelautomat (27) für eine optimierte Ansteuerung der Reifendruckregelanlage (52) in Abhängigkeit von in der Speichereinheit (8) hinterlegten auswählbaren Regelstrategien (30) und/oder Optimierungszielgrößen (33) angesteuert wird, **dadurch gekennzeichnet, dass** der Reifendruckregelautomat (27) Steuersignale (A) generiert, die zumindest einer Steuervorrichtung (13, 15) der Zugmaschine (1) zugeführt werden und dort die Ansteuerung der Reifendruckregelanlage (52) der Zugmaschine (1) durch Generierung entsprechender Steuersignale (B) bewirken.

## Claims

1. A towing vehicle (1), in particular a tractor (2), with a drive train (5) and a tyre pressure control system (52) for setting and adjusting an internal pressure of a tyre (p₁, p₂) of at least one tyre (50, 51) of the towing vehicle (1), as well as with at least one attachment (3, 4) which is adapted to the towing vehicle (1), wherein the drive train (5) comprises at least one propulsion engine (16), a transmission (17), at least one auxiliary power take-off (18) and at least one auxiliary unit (19), wherein the towing vehicle (1) has a driver assistance system (6) for controlling the tyre pressure control system (52) which is configured with a processing unit (7), a storage unit (8) as well as an input/output unit (9), wherein the driver assistance system (6) comprises an automatic tyre pressure controller (27) which operates on the basis of characteristic curves, wherein the automatic tyre pressure controller (27) is configured for an optimized control of the tyre pressure control system (52) as a function of selectable control strategies (30) and/or optimization target variables (33) stored in the storage unit (8), **characterized in that** the automatic tyre pressure controller (27) is configured in a manner such that the automatic tyre pressure controller (27) generates control signals (A) which are supplied to at least one control device (13, 15) of the towing vehicle (1) and therein cause control of the tyre pressure control system (52) of the towing vehicle (1) by generating corresponding control signals (B).

2. The towing vehicle (1) according to claim 1, **characterized in that** the tyre pressure control system (52) together with the driver assistance system (6) forms the automatic tyre pressure controller (27), in which, in order to execute the respectively selected control strategy (30) and/or optimization target variable (33), the processing unit (7) is configured to autonomously determine the parameters for setting the internal tyre pressure (p₁, p₂), and to specify them to the tyre pressure control system (52).

3. The towing vehicle (1) according to claim 1 or claim 2, **characterized in that** the selectable control strategy (30) comprises at least one "efficiency" (31) control strategy or "power" (32) control strategy.

4. The towing vehicle (1) according to one of claims 1 to 3, **characterized in that** the optimization target variables (33) are "area output" (34), "land usage" (35), "yield per unit area" (36), "cost per unit area" (37), and/or "work quality" (38).

5. The towing vehicle (1) according to one of the preceding claims, **characterized in that** the automatic tyre pressure controller (27) is configured to optimize the traction efficiency of the towing vehicle (1) as a function of the selected control strategy (30) and/or the optimization target variable (33).

6. The towing vehicle (1) according to one of the preceding claims, **characterized in that** the automatic tyre pressure controller (27) is configured to optimize the internal tyre pressure (p₁, p₂) for a specific wheel and/or axle and/or overall.

7. The towing vehicle (1) according to one of the preceding claims, **characterized in that** the parameters to be considered for optimized control of the tyre pressure control system (52) are operating parameters of the towing vehicle (1), of the drive train (5), of the attachment (3, 4), and/or environmental parameters (10a, 11a) resulting from environmental conditions.

8. The towing vehicle (1) according to claim 7, **characterized in that** sensor devices (25, 26, 53) are disposed on at least the towing vehicle (1), and which are configured to determine operating parameters and/or environmental parameters (10a, 11a).

9. The towing vehicle (1) according to claim 7 or claim 8, **characterized in that** the operating parameters of the towing vehicle (1) comprise the power output of the at least one propulsion engine (16), the power output of the transmission (17) or the transmission load factor, the driving power of the at least one auxiliary unit (19) and/or of the at least one auxiliary power take-off (18), the slip, the driving speed, the transmission ratio, the power flow in the hydraulic drive train, the type of attachment and/or the setting parameters for the attachment (3, 4).

10. The towing vehicle (1) according to one of the preceding claims, **characterized in that** a functional model of the towing vehicle (1) and of the attachment (3, 4) is stored in the storage unit, the model representing at least a portion of the functional relationships between the towing vehicle (1) and the attachment (3, 4).

11. The towing vehicle (1) according to one of the preceding claims, **characterized in that** in order to represent the functional relationships of the towing vehicle (1), at least one n-dimensional characteristic map (42) is assigned to the operating parameter of internal tyre pressure (p₁, p₂), wherein the internal tyre pressure (p₁, p₂) is defined as an output variable of the at least one n-dimensional characteristic map (42).

12. The towing vehicle (1) according to claim 11, **characterized in that** at least one or more operating parameters of the towing vehicle (1), the attachment (3, 4) and/or from the environmental parameters (10a, 11a) resulting from the environmental conditions are the input variables of the at least one n-dimensional characteristic map (42).

13. The towing vehicle (1) according to claim 11 or claim 12, **characterized in that** the processing unit (7) selects the at least one n-dimensional characteristic map (42) as a function of the selected control strategy (30) and/or optimization target variable (33) and bases the determination of the internal tyre pressure (p₁, p₂) thereon.

14. The towing vehicle (1) according to one of claims 11 to 13, **characterized in that** the processing unit (7) aligns the at least one n-dimensional characteristic map (42) during ongoing operations, in particular cyclically, with the conditions of use of the towing vehicle (1), preferably **in that** at least one n-dimensional initial characteristic map (42') is stored in the storage unit (8), and **in that** during the initial determination of the internal tyre pressure (p₁, p₂), the processing unit (7) carries out the determination based on the initial characteristic map (42').

15. The towing vehicle (1) according to claim 14, **characterized in that** the processing unit (7) is configured to adapt the form of the initial characteristic map (42') to existing conditions of use by the use of measured operating parameters of at least the towing vehicle (1) or by approaching sampling points in the initial characteristic map (42').

16. A driver assistance system (6) with an automatic tyre pressure controller (27) for use with a towing vehicle (1, 2), wherein the driver assistance system (6) is configured with a processing unit (7), a storage unit (8) as well as with an input/output unit (9), wherein the automatic tyre pressure controller (27) is configured to operate on the basis of characteristic curves, wherein the automatic tyre pressure controller (27) is configured for an optimized control of a tyre pressure control system (52) of the towing vehicle (1, 2) as a function of selectable control strategies (30) and/or optimization target variables (33) which are stored in the storage unit (8), **characterized in that** the automatic tyre pressure controller (27) is configured such that the automatic tyre pressure controller (27) generates control signals (A) which can be supplied to at least one control device (13, 15) of the towing vehicle (1) in order to cause therein the control of the tyre pressure control system (52) of the towing vehicle (1) by generating corresponding control signals (B).

17. The driver assistance system (6) according to claim 16, **characterized in that** the configuration of the driver assistance system (6) is based on a data cloud service.

18. The driver assistance system (6) according to claim 16 or claim 17, **characterized in that** the driver assistance system (6) comprises a mobile data transfer device.

19. A method for operating a towing vehicle (1), in particular a tractor (2), with a drive train (5) and a tyre pressure control system (52) for setting and adjusting an internal tyre pressure (p₁, p₂) of at least one tyre (50, 51) of the towing vehicle (1) as well as with at least one attachment (3, 4) adapted to the towing vehicle (1), wherein the drive train (5) comprises at least one propulsion engine (16), a transmission (17), at least one auxiliary power take-off (18) and at least one auxiliary unit (19), wherein the towing vehicle (1) is controlled by a driver assistance system (6) which is configured with a processing unit (7), a storage unit (8) as well as with an input/output unit (9), wherein the tyre pressure control system (52) is controlled by an automatic tyre pressure controller (27) of the driver assistance system (6) which operates on the basis of characteristic curves, wherein the automatic tyre pressure controller (27) is controlled for an optimized control of the tyre pressure control system (52) as a function of selectable control strategies (30) and/or optimization target variables (33) stored in the storage unit (8), **characterized in that** the automatic tyre pressure controller (27) generates control signals (A) which are supplied to at least one control device (13, 15) of the towing vehicle (1) and therein cause out the control of the tyre pressure control system (52) of the towing vehicle (1) by generating corresponding control signals (B).

## Revendications

1. Machine de traction (1), en particulier tracteur (2), comprenant une chaîne de transmission (5) et une installation de réglage de pression de pneumatiques (52) pour le réglage et l'adaptation d'une pression intérieure de pneumatique (p₂, p₂) au moins d'un pneumatique (50, 51) de la machine de traction (1) ainsi que comprenant au moins un outil rapporté (3, 4) adapté à la machine de traction (1), la chaîne de transmission (5) incluant au moins un moteur d'entraînement (16), une transmission (17), au moins un moyen mené secondaire (18) et au moins un organe auxiliaire (19), la machine de traction (1) comportant, pour commander l'installation de réglage de pression de pneumatiques (52), un système d'assistance à la conduite (6) qui est conçu avec une unité de calcul (7), une unité de mémoire (8) ainsi qu'une unité d'entrée/sortie (9), le système d'assistance à la conduite (6) incluant un l'automate de réglage de pression de pneumatiques (27) fonctionnant sur la base de courbes caractéristiques, l'automate de réglage de pression de pneumatiques (27) étant agencé pour une commande optimisée de l'installation de réglage de pression de pneumatiques (52) en fonction de stratégies de régulation (30) et/ou grandeurs cibles d'optimisation (33) sélectionnables enregistrées dans l'unité de mémoire (8), **caractérisée en ce que** l'automate de réglage de pression de pneumatiques (27) est agencé de façon que l'automate de réglage de pression de pneumatiques (27) génère des signaux de commande (A) qui sont envoyés au moins à un dispositif de commande (13, 15) de la machine de traction (1) et y assurent la commande de l'installation de réglage de pression de pneumatiques (52) de la machine de traction (1) en générant des signaux de commande (B) correspondants.

2. Machine de traction (1) selon la revendication 1, **caractérisée en ce que** l'installation de réglage de pression de pneumatiques (52) forme conjointement avec le système d'assistance à la conduite (6) l'automate de réglage de pression de pneumatiques (27) par le fait que l'unité de calcul (7) est agencée pour déterminer de manière autonome la pression intérieure de pneumatique (p₁, p₂) à instaurer afin de convertir la stratégie de régulation (30) et/ou grandeur cible d'optimisation (33) respectivement sélectionnée et de la prescrire à l'installation de réglage de pression de pneumatiques (52).

3. Machine de traction (1) selon une des revendications 1 ou 2, **caractérisée en ce que** la stratégie de régulation sélectionnable (30) inclut au moins une stratégie de régulation « efficience » (31) ou « puissance » (32).

4. Machine de traction (1) selon une des revendications 1 à 3, **caractérisée en ce que** les grandeurs cibles d'optimisation (33) sont « rendement par unité de surface » (34), « utilisation de la surface » (35), « rendement par surface » (36), « coût par surface » (37) et/ou « qualité de travail » (38).

5. Machine de traction (1) selon une des revendications précédentes, **caractérisée en ce que** l'automate de réglage de pression de pneumatiques (27) est agencé pour optimiser le rendement de traction de la machine de traction (1) en fonction de la stratégie de régulation (30) et/ou grandeur cible d'optimisation (33) sélectionnée.

6. Machine de traction (1) selon une des revendications précédentes, **caractérisée en ce que** l'automate de réglage de pression de pneumatiques (27) est agencé pour optimiser la pression intérieure de pneumatique (p₁, p₂) de manière spécifique à une roue et/ou à un essieu et/ou de manière globale.

7. Machine de traction (1) selon une des revendications précédentes, **caractérisée en ce que** les paramètres à prendre à compte pour la commande optimisée de l'installation de réglage de pression de pneumatiques (52) sont des paramètres de fonctionnement de la machine de traction (1), de la chaîne de transmission (5), de l'outil rapporté (3, 4) et/ou des paramètres environnementaux (10a, 11a) résultant de conditions environnantes.

8. Machine de traction (1) selon la revendication 7, **caractérisée en ce qu'**au moins sur la machine de traction (1) sont disposés des équipements de capteurs (25, 26, 53) qui sont agencés pour déterminer des paramètres de fonctionnement et/ou des paramètres environnementaux (10a, 11a).

9. Machine de traction (1) selon une des revendications 7 ou 8, **caractérisée en ce que** les paramètres de fonctionnement de la machine de traction (1) incluent la puissance de sortie du au moins un moteur d'entraînement (16), la puissance de sortie de la transmission (17) respectivement la charge à la transmission, la puissance d'entraînement du au moins un organe auxiliaire (19) et/ou du au moins un moyen mené secondaire (18), le patinage, la vitesse de marche, le rapport de transmission, le flux de puissance dans la chaîne de transmission hydraulique, le type de outil rapporté et/ou des paramètres de réglage de l'outil rapporté (3, 4).

10. Machine de traction (1) selon une des revendications précédentes, **caractérisée en ce que** dans l'unité de mémoire est enregistré un modèle fonctionnel de la machine de traction (1) et de l'outil rapporté (3, 4), lequel représente au moins une partie des relations fonctionnelles de la machine de traction (1) et de l'outil rapporté (3, 4).

11. Machine de traction (1) selon une des revendications précédentes, **caractérisée en ce que**, pour représenter les relations fonctionnelles de la machine de traction (1), au moins un diagramme caractéristique n-dimensionnel (42) est associé au paramètre de fonctionnement pression intérieure de pneumatique (p₂, p₂), la pression intérieure de pneumatique (p₂, p₂) étant définie comme grandeur de sortie du au moins un diagramme caractéristique n-dimensionnel (42).

12. Machine de traction (1) selon la revendication 11, **caractérisée en ce qu'**au moins un ou plusieurs paramètres de fonctionnement de la machine de traction (1), de l'outil rapporté (3, 4) et/ou paramètres environnementaux (10a, 11a) résultant des conditions environnantes sont les grandeurs d'entrée du au moins un diagramme caractéristique n-dimensionnel (42).

13. Machine de traction (1) selon une des revendications 11 ou 12, **caractérisée en ce que** l'unité de calcul (7) sélectionne le au moins un diagramme caractéristique n-dimensionnel (42) en fonction de la stratégie de régulation (30) et/ou grandeur cible d'optimisation (33) sélectionnée, et le prend pour base afin de déterminer la pression intérieure de pneumatique (p1, p2).

14. Machine de traction (1) selon une des revendications 11 à 13, **caractérisée en ce que** l'unité de calcul (7) compense le au moins un diagramme caractéristique n-dimensionnel (42) durant le fonctionnement, en particulier cycliquement, avec les conditions d'utilisation de la machine de traction (1), préférentiellement **en ce que** dans l'unité de mémoire (8) est enregistré au moins un diagramme caractéristique initial n-dimensionnel (42'), et **en ce que**, lors de la première détermination de la pression intérieure de pneumatique (p₂, p₂), l'unité de calcul (7) effectue la détermination sur la base du diagramme caractéristique initial (42').

15. Machine de traction (1) selon la revendication 14, **caractérisée en ce que** l'unité de calcul (7) est agencée pour réaliser une adaptation de l'empreinte du diagramme caractéristique initial (42') aux conditions d'utilisation existantes en utilisant des paramètres de fonctionnement mesurées au moins de la machine de traction (1) ou en ralliant des points d'appui dans le diagramme caractéristique initial (42').

16. Système d'assistance à la conduite (6) comprenant un automate de réglage de pression de pneumatiques (27) à utiliser avec une machine de traction (1, 2), le système d'assistance à la conduite (6) étant conçu avec une unité de calcul (7), une unité de mémoire (8) ainsi qu'une unité d'entrée/sortie (9), l'automate de réglage de pression de pneumatiques (27) étant agencé pour fonctionner sur la base de courbes caractéristiques, l'automate de réglage de pression de pneumatiques (27) étant agencé pour une commande optimisée d'une installation de réglage de pression de pneumatiques (52) de la machine de traction (1, 2) en fonction de stratégies de régulation (30) et/ou grandeurs cibles d'optimisation (33) sélectionnables enregistrées dans l'unité de mémoire (8), **caractérisé en ce que** l'automate de réglage de pression de pneumatiques (27) est agencé de façon que l'automate de réglage de pression de pneumatiques (27) génère des signaux de commande (A) qui sont envoyables au moins à un dispositif de commande (13, 15) de la machine de traction (1) afin d'y assurer la commande de l'installation de réglage de pression de pneumatiques (52) de la machine de traction (1) en générant des signaux de commande (B) correspondants.

17. Système d'assistance à la conduite (6) selon la revendication 16, **caractérisé en ce que** le système d'assistance à la conduite (6) est conçu sur la base d'un service de cloud de données.

18. Système d'assistance à la conduite (6) selon la revendication 16 ou 17, **caractérisé en ce que** le système d'assistance à la conduite (6) inclut un appareil mobile de transmission de données.

19. Procédé de fonctionnement d'une machine de traction (1), en particulier d'un tracteur (2), comprenant une chaîne de transmission (5) et une installation de réglage de pression de pneumatiques (52) pour le réglage et l'adaptation d'une pression intérieure de pneumatique (p₂, p₂) au moins d'un pneumatique (50, 51) de la machine de traction (1) ainsi que comprenant au moins un outil rapporté (3, 4) adapté à la machine de traction (1), la chaîne de transmission (5) incluant au moins un moteur d'entraînement (16), une transmission (17), au moins un moyen mené secondaire (18) et au moins un organe auxiliaire (19), la machine de traction (1) étant commandée par l'intermédiaire d'un système d'assistance à la conduite (6) qui est conçu avec une unité de calcul (7), une unité de mémoire (8) ainsi qu'une unité d'entrée/sortie (9), l'installation de réglage de pression de pneumatiques (52) étant commandée par l'intermédiaire d'un automate de réglage de pression de pneumatiques (27), fonctionnant sur la base de courbes caractéristiques, du système d'assistance à la conduite (6), l'automate de réglage de pression de pneumatiques (27) étant agencé pour une commande optimisée de l'installation de réglage de pression de pneumatiques (52) en fonction de stratégies de régulation (30) et/ou grandeurs cibles d'optimisation (33) sélectionnables enregistrées dans l'unité de mémoire (8), **caractérisé en ce que** l'automate de réglage de pression de pneumatiques (27) génère des signaux de commande (A) qui sont envoyés au moins à un dispositif de commande (13, 15) de la machine de traction (1) et y assurent la commande de l'installation de réglage de pression de pneumatiques (52) de la machine de traction (1) en générant des signaux de commande (B) correspondants.
